# EUROPEAN PATENT SPECIFICATION

(11) **EP 3 525 943 B1**
(45) Date of publication and mention of the grant of the patent: **08.07.2020**
(21) Application number: 16787362.9
(22) Date of filing: 17.10.2016
(51) Int. Cl.: B08B 3/02, B08B 7/00, B23K 26/146

(54) **CLEANING DEVICE AND METHOD FOR CONTROLLING A LASER FOCUS INSIDE A FLUID BEAM, AND A SYSTEM INCLUDING THE CLEANING DEVICE**
REINIGUNGSVORRICHTUNG UND VERFAHREN ZUR STEUERUNG EINES LASERFOKUS INNERHALB EINES FLÜSSIGKEITSSTRAHLES UND SYSTEM UMFASSEND DER REINIGUNGSVORRICHTUNG
APPAREIL DE NETTOYAGE ET METHODE DE COMMANDE D'UN FOCUS LASER À L'INTERIEUR D'UN JET D'EAU ET SYSTEME COMPRENANT LE DISPOSITIF DE NETTOYAGE

(43) Date of publication of application: 21.08.2019
(73) Proprietor: ABB Schweiz AG, 5400 Baden (CH)
(72) Inventor: SIRKETT, Daniel, 722 10 Västerås (SE)
(74) Representative: Kransell & Wennborg KB
(86) International application number: PCT/EP2016/074830
(87) International publication number: WO 2018/072808

(56) References cited:
- WO-A1-94/19140
- WO-A1-99/56907
- WO-A2-2008/149352

## Description

### Technical field

The present disclosure relates to technology for cleaning, and to some extent to technology for cleaning of industrial robots. In particular the disclosure relates to a cleaning device and a method for controlling a laser focus inside a fluid beam, and to a system for cleaning an industrial robot including at least one such cleaning device.

### Background

Equipment used in the handling of open food products i.e. fish, meat, poultry and dairy is subject to strict hygiene requirements and must be washed down daily using hot high pressure water and chemical agents. At present cleaning is often performed manually by a cleaning team equipped with high-pressure spray lances that works through the night to ensure the equipment is clean in time for the morning shift. The effectiveness of this wash down depends to a large extent on the skill of the cleaning workers, and failure to follow the correct procedure can have serious implications for the food facility. Where possible, clean-in-place (CIP) cleaning systems are employed to automate washdown. Such systems may include fixed or moving high pressure spray nozzles that are installed at strategic points within and around the equipment. While CIP is effective at cleaning internal surfaces of machines of the equipment, manual spraying is generally used on exterior surfaces.

High pressure spraying is effective for removing large dirt particles, but is often unable to remove finer particles, which are more effectively removed by mechanical scrubbing. Thus, high pressure spraying alone does not guarantee the removal of surface residue including bacteria, especially from pores and crevices which are difficult for the spray to access. A further problem is the generation of humidity, which may accelerate corrosion throughout the facility of the equipment. It is also known to use ultrasonic cleaning, which provides superior residue and bacterial removal, without splash generation. However existing solutions for treating surfaces have a limited operating range, making their use for automated cleaning of arbitrary 3D surfaces impractical.

The variability of the cleaning result from the existing wash down methods exists for food-handling equipment in general, but will arguably be exacerbated for robots due to their increased use in food handling.

From US3503804A it is known to transmit a laser light in a stream of water for cleaning purposes. The laser has a fixed focus, and the concentrated energy causes the water to boil locally, forming vapour bubbles which collapse on the surface to give the cleaning effect, as per normal ultrasonic cleaning.

Further, it is known from EP2470310B1 to have an ultrasonic cleaner embodied as a portable, handheld cleaning device that produces a cavitation cleaning action in a flow of water allowing surfaces to be ultrasonically cleaned without immersion in a tank.

WO 99/56907 describes a method and device for shaping material of workpieces using a laser beam which is injected into a stream of liquid. The liquid, which is to be formed into a stream, is fed to the nozzle channel opening such that the liquid does not swirl, especially without flow components which are tangential to the nozzle channel axis.The laser irradiation is focused on a channel entry plane and the liquid is fed to the channel opening in such a way that a liquid retention space is avoided in a beam focusing ball and in the immediate surroundings thereof.

### Summary

The technology in the above mentioned prior art is however not adapted for automated use. It is also not adapted to be used on irregular surfaces.

It is an object of the disclosure to alleviate at least some of the drawbacks with the prior art. It is a further object to provide a device that is arranged to clean three-dimensional (3D) surfaces such that finer particles are removed. It is a further object of the disclosure to provide a device that is arranged to clean 3D surfaces such that finer particles are removed in an automated way. It is a further objective to provide such device that is adapted to clean a robot. These object and others are at least partly achieved by the method and the device according to the independent claims, and by the embodiments according to the dependent claims.

According to a first aspect, the disclosure relates to a cleaning device including a fluid assembly arranged to produce a fluid beam. The fluid assembly includes an enclosure with a fluid inlet port and an outlet orifice, and a fluid flow path between the fluid inlet port and the outlet orifice. The enclosure also includes a laser input port. The cleaning device further includes an optical assembly including a laser beam optic arrangement configured to direct a first laser beam through the laser input port and further through the outlet orifice and to focus the first laser beam inside the fluid beam. The cleaning device also includes a sensing arrangement configured to emit a sensing signal through the laser input port and further trough the outlet orifice, and to receive a reflected signal of the sensing signal reflected by the fluid beam. The cleaning device is further configured to determine length data of the fluid beam based on the reflected signal, wherein the optical assembly is arranged to regulate the laser beam optic arrangement based on the determined length data in order to control the focus of the first laser beam.

By the cleaning device it is possible to achieve an ultrasonic cleaning action produced by focusing laser light to produce cavitation inside a fluid beam, e.g. a laminar flow of water, near or on a target surface. Since energy is focused at the point of application, cleaning efficacy does not diminish with distance as with a high pressure spray. As the focus is automatically adjusted, the cleaning device is suitable for automated cleaning, e.g. clean-in-place (CIP) systems. The cleaning device is capable of automated cleaning of three dimensional (3D) surfaces over distances of several metres, and is more effective at removing bacteria and fine residue than high pressure spray, while avoiding excessive humidity generation. There is also no need for high pressure or high temperature fluid.

The business benefits implied by the invention are several. For example may cost savings be made through replacement of manual cleaning of equipment with the cleaning device. The hygiene is improved through more effective removal of bacteria and residue. Further, as no high pressure or high temperature fluid is necessary when using the cleaning device, cost savings can be made. Also, the cleaning device produce less humidity during wash down than high pressure sprays, and thus decrease the distribution of small dirt particles.

According to some embodiments, the sensing signal is a second laser beam, and then the sensing arrangement includes a time of flight sensing optic arrangement configured to generate the second laser beam and to detect the reflected signal.

According to some embodiments, the first laser beam and the second laser beam have different colors, and the laser beam optic arrangement includes a dichroic mirror arranged to reflect the first laser beam and to transmit the second laser beam.

According to some embodiments, the laser beam optic arrangement includes an expansion element arranged to expand the first laser beam, an axially movable focusing element arranged to focus the first laser beam, and an actuator arranged to regulate the axial movement of the focusing element based on a control signal.

According to some embodiments, the optical assembly includes a cleaning device control unit configured to receive length data, and to generate a control signal based on the received length data and send it to the laser beam optic arrangement, whereby the laser beam optic arrangement is configured to regulate the focus of the first laser beam based on the control signal.

According to some embodiments, the optical assembly includes a housing accommodating the laser beam optic arrangement.

According to some embodiments, the housing is arranged with a laser exit port arranged coaxial with the laser input port and the outlet orifice.

According to some embodiments, the flow area of the outlet orifice is smaller than an area of the fluid flow path within the enclosure, and wherein the fluid assembly includes a plurality of parallel sub flow paths arranged parallel with the outlet orifice and within the enclosure in order to produce a laminar flow in the enclosure.

According to some embodiments, the outlet orifice has a sharp edge against an inside of the enclosure.

According to some embodiments, the enclosure includes a tube for guiding the first laser beam, the sensing signal and the reflected signal inside the enclosure.

According to some embodiments, the first laser beam and the sensing signal are configured to be pulsed in synchronization, such that the sensing signal can be emitted and the reflected signal can be received while the first laser beam is switched off.

According to some embodiments, the cleaning device includes a control arrangement with a cleaning device control unit for controlling motion of the fluid assembly and/or a flow velocity of the fluid beam in order to target the fluid beam against a target.

According to some embodiments, the control arrangement is arranged to control a movement of the fluid assembly and the optical assembly in accordance with a computer implemented rule.

According to a second aspect, the disclosure relates to a system for cleaning an industrial robot. The system includes at least one cleaning device, and a robot controller is configured to control motion of the industrial robot, and a cleaning device control unit is configured to control motion of the cleaning device, in synchronization with each other.

According to a third aspect, the disclosure relates to a method for controlling a laser focus inside a fluid beam. The method includes generating a first laser beam with a beam path inside the fluid beam, and emitting a sensing signal with a signal path inside the fluid beam. The method further includes detecting a reflected signal of the sensing signal reflected by the fluid beam, and determining a length of the fluid beam based on the detected reflected signal. The method further includes controlling the focus of the first laser beam based on the determined length of the fluid beam.

According to some embodiments, the method includes targeting the fluid beam against a target.

### Brief description of the drawings

Fig. 1 illustrates an example of a robotized meat-slicing cell arranged with a system for cleaning according to some embodiments.
Fig. 2 illustrates a part of the robotized meat-slicing cell in greater detail.
Fig. 3 illustrates a controller of a robot and a cleaning control unit according to one embodiment.
Fig. 4 illustrates the principle of laser cavitation in a fluid beam produced by a cleaning device according to some embodiments.
Fig. 5 illustrates the cleaning device in Fig. 4 with a control arrangement according to some embodiments.
Fig. 6 illustrates the cleaning device in Figs. 4 and 5 according to some embodiments.
Fig. 7 illustrates a vertical cross-section of the cleaning device in Fig. 6.
Fig. 8 illustrates an optical assembly according to some embodiments.
Fig. 9 illustrates a vertical cross-section of the optical assembly in Fig. 8.
Fig. 10 illustrates the laser beam path through the optical assembly according to some embodiments.
Fig. 11 illustrates the sensing signal path through the optical assembly according to some embodiments.
Fig. 12 illustrates an example of a mobile platform arranged with a cleaning device.
Fig. 13 illustrates a flow chart of a method according to some embodiments.

### Detailed description

In the following a cleaning device 1 and a method for controlling a laser focus inside a fluid beam 5 will be described. By focusing the laser beam 5 inside the fluid beam 2 near a target surface, cavitation occurs in the fluid beam 2 near the target surface. This effect will in the following be exemplified in a system 4 for cleaning robots 3A, 3B, but it is should be understood that the cleaning device 1 also may be used in other cleaning applications.

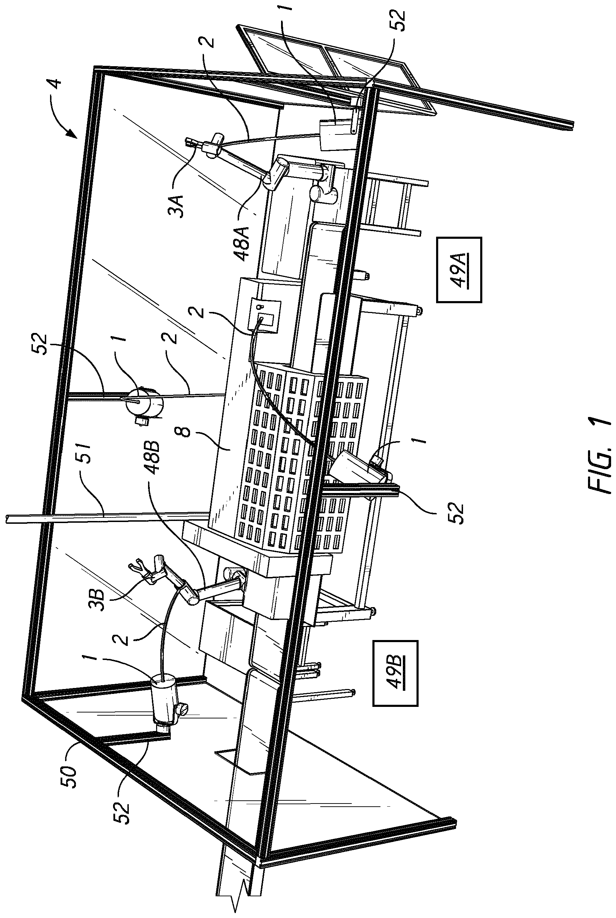

In Fig. 1 an example of a robotized open food handling facility is illustrated. The facility here includes a system 4 for cleaning a first robot 3A with a robot arm 48A and a second robot 3B with a robot arm 48B that are used in the facility. The first robot 3A is arranged to pick up large pieces of meat from an input buffer and to place the meat on a machine conveyor of a slicing machine. When in use, the machine conveyor transports the meat into the slicing machine at one end of the slicing machine. The slicing machine slices the meat, and meat slices emerge at the other end of the slicing machine. The meat slices are picked by the second robot 3B, which loads them into a tray and places them on the exit conveyor. The first robot 3A, the second robot 3B, the slicing machine and the conveyors are all part of a cell. The cell is fenced by an enclosure 50 e.g. made of transparent plastic or glass, in order to prevent anybody from coming too close to the cell. Power to the cell is delivered from a cable of the facility via a pole 51. Cleaning devices 1 included in the system 4 for cleaning are arranged suspended from support structures 52 arranged to the enclosure 50.

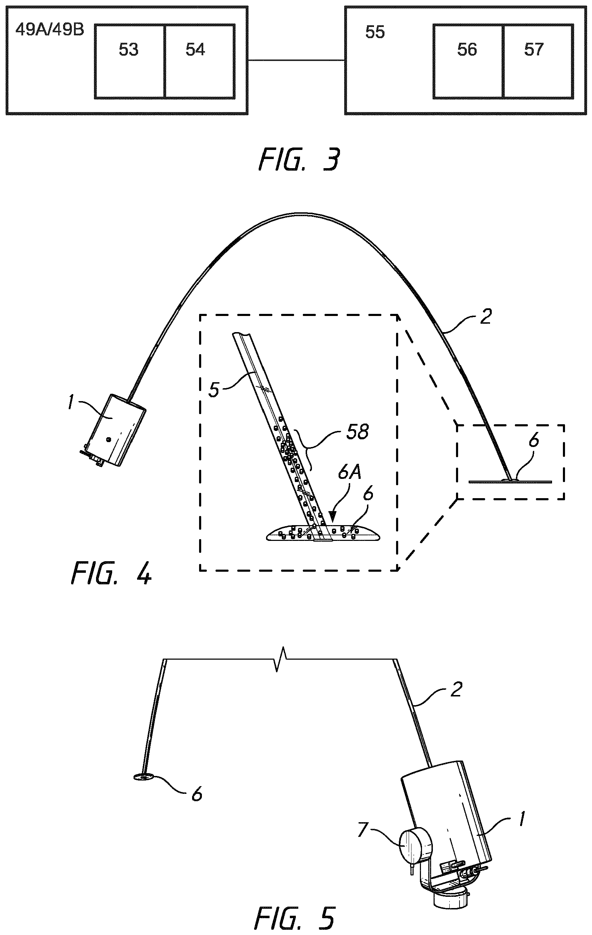

The first robot 3A and the second robot 3B are industrial robots. An industrial robot is here defined to be a robot that can be automatically controlled, that is reprogrammable, that can adopt to a multitude of tasks and has three or more axes. In this example, the first robot 3A and the second robot 3B are serial six axis robots. The first robot 3A is arranged to be controlled by a first robot controller 49A, and the second robot 3A is arranged to be controlled by a second robot controller 49B. Each robot controller 49A, 49B includes a memory 54 (Fig. 3) and a processor 53 (Fig. 3). The memory 52 may be made up of one or several memory units. The processor 53 may be made up of one or several CPUs (Central Processing Units). The first robot 3A and the second robot 3B each has a sealed construction to provide a water proof surface that can be washed and at the same time protects the parts of the robot 3A, 3B, and also protects the environment from residuals from the robot 3A, 3B, e.g. lubrication oil. All cables of a robot 3A, 3B are enclosed inside the sealed construction. The sealed construction is typically made of stainless steel. The sealed construction may have a tube shape and be made of a plurality of interconnected tubes.

In this example the system 4 for cleaning the industrial robots 3A, 3B and the other equipment 8 in the cell includes four cleaning devices 1. Each cleaning device 1 is arranged to produce a fluid beam 2 and project it at an object i.e. a robot 3A, 3B or other equipment 8 in order to clean them. A cleaning device 1 is powered e.g. from the mentioned power cable.

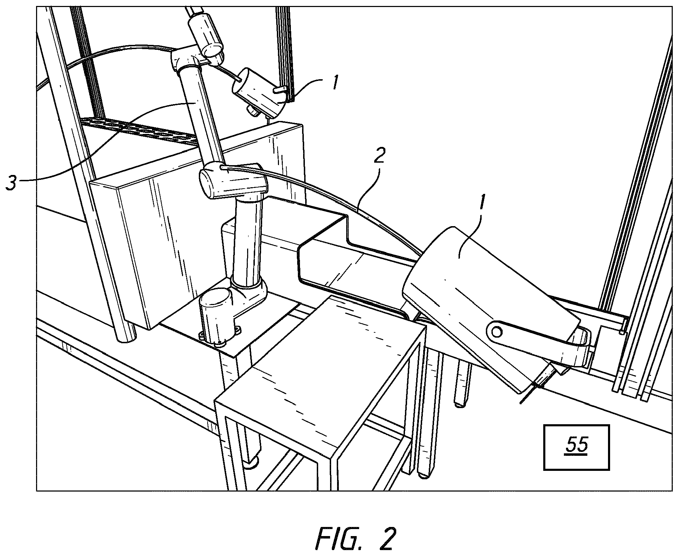

In Fig. 2 one of the cleaning devices 1 in Fig. 1 is illustrated in more detail. The cleaning device 1 in Fig. 2 and each cleaning device 1 in Fig. 1 is arranged with a respective cleaning device control unit 55. The cleaning device control unit 55 includes a memory 56 (Fig. 3) and a processor 57 (Fig. 3). The memory 56 may be made up of one or several memory units. The processor 57 may be made up of one or several CPUs (Central Processing Units). The cleaning device control unit 55 is in some embodiments configured to control motion of the cleaning device 1 as will be further explained in the following. In some embodiments, a robot controller 49A, 49B of an industrial robot 3A, 3B is configured to control motion of the industrial robot 3A, 3B, and a cleaning device control unit 55 is configured to control motion of an associated cleaning device 1, in synchronization with each other, in order to clean the industrial robot 3A, 3B. The robot 3A, 3B can then be moved such that the cleaning device 1 may reach areas that otherwise are hard to reach. As illustrated in Fig. 3, the robot controller 49A, 49B is then arranged to be in communication with the cleaning device control unit 55. The communication is for example wired, or wireless.

In Fig. 4 the principle of laser cavitation in the fluid beam 2 is illustrated. The cleaning device 1 in Fig. 4 is here producing a concentrated fluid beam 2 and is targeting the fluid beam 2 against an object 6, here covered with dirt, as can be seen from the enlargement of a part of the illustration. The fluid is pumped to the cleaning device 1 with a certain pressure in order to produce the fluid beam 2. The fluid pressure is in some embodiments varied to change a targeting distance. The concentrated energy in the laser focus inside the fluid beam 2, whose focus in this example is depicted as a laser focus zone 58 inside the fluid beam 2, causes the water to boil locally, forming vapour bubbles that collapse on the surface 6A of the object 6 to give the cleaning effect. The laser beam 5 thus propagates inside the fluid beam 2. It is generally important to focus the laser beam 5 correctly; if the laser focus is too far upstream the surface 6A of the object 6, the bubbles will collapse before they can do any cleaning to the surface 6A; and if the laser focus on the other hand is too far i.e. beyond the surface 6A then no bubbles will be formed. The laser focus is for example focused upstream but close to the surface 6A, or at the surface 6A. Since energy is focused at a point of application, cleaning efficacy does not diminish with distance as with a high pressure spray.

The cleaning device 1 is in the figures directed slightly upwards in order to produce a parabolic trajectory of the fluid beam 2. In this way the fluid velocity of the fluid beam 2 can be kept rather low and the fluid beam 2 can be made in a concentrated form. Also, the fluid beam 2 can then target surfaces located behind an object 6, and thus reach a greater area to clean.

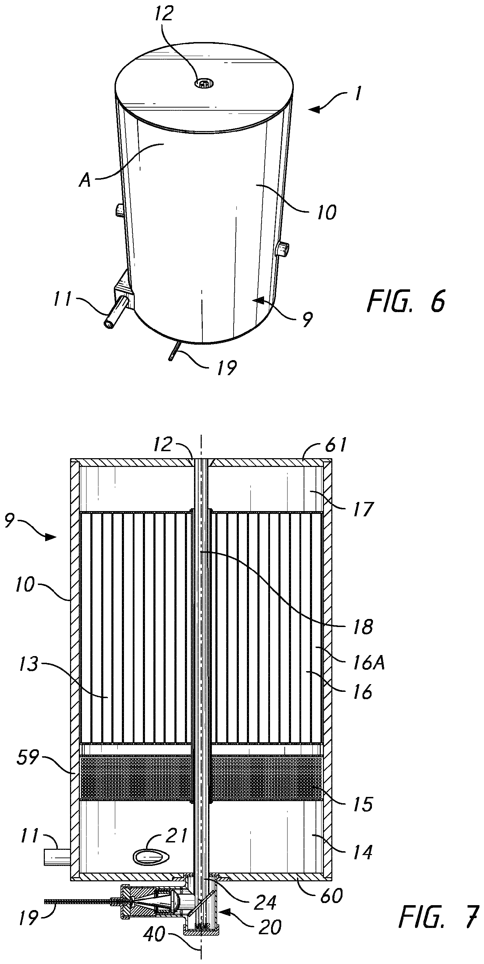

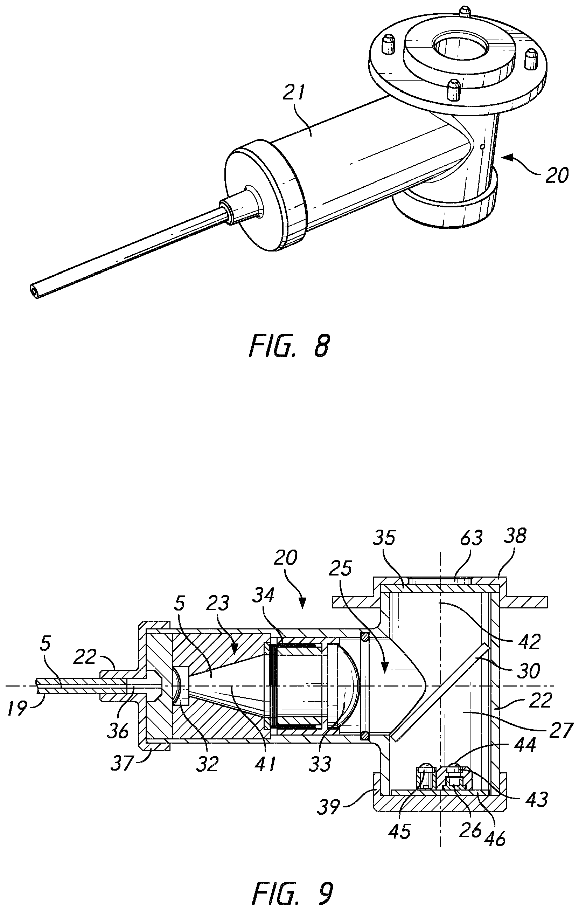

In the following the cleaning device 1 will be explained in more detail with reference to the Figs. 5 to11, and in particular a control arrangement in Fig. 5, a fluid assembly 9 arranged to produce the fluid beam 2 in Figs. 6 to 7, and an optical assembly 20 in Figs. 8 to 11.

Fig. 5 is illustrating the cleaning device 1 including the control arrangement 7 according to some embodiments. The control arrangement 7 includes a cleaning device control unit 55 arranged for controlling a motion of the cleaning device 1. The control arrangement 7 is thus arranged to control a motion of the fluid assembly 9, and thus of the therefrom produced fluid beam 2. The control arrangement 7 may include a motorized pan and/or tilt platform, and the fluid assembly 9 is then mounted on the platform. The platform is suitable for computer control and is arranged to be controlled by the cleaning device control unit 55. With such a setup, the desired cleaning target could be selected by varying the pan and/or tilt controls as well as the water flow rate, in order to vary the trajectory of the fluid beam 2, thus varying the output, or throw, from the fluid assembly 9. Thus, the cleaning device control unit 55 may be arranged for controlling motion of the fluid assembly 9 and/or the flow velocity of the fluid beam 2 in order to target the fluid beam 2 against a target. The cleaning device control unit 55 is then arranged to control e.g. a fluid pump to supply a desired fluid flow rate to a fluid inlet port 11 (Fig. 6) of the cleaning device 1 via a fluid line, or arranged to control a fluid restriction device such as a valve device on a fluid line connected to the fluid inlet port 11 of the cleaning device 1. The desired fluid flow rate corresponds to a desired flow velocity in the fluid beam 2 in order to target the fluid beam 2 against a target, e.g. the surface 6A of the object 6. In some embodiments, the control arrangement 7 is arranged to control a movement of the fluid assembly 9 and the optical assembly 20 in accordance with a computer implemented rule. The computer implemented rule defines e.g. a target path for the fluid beam 2. The target path is for example following a serpentine path over an area to be cleaned. As the focus of the laser beam 5 will be regulated in accordance with the length of the fluid beam 2, a continuous cleaning effect over the whole area is achieved.

In Fig. 6 the cleaning device 1 is illustrated without the control arrangement 7, and in an upright position. The fluid assembly 9 includes an enclosure 10 with a fluid inlet port 11 and an outlet orifice 12. The cleaning device 1 also includes an optical assembly 20 (Fig. 7) and in this illustration a laser inlet 19 of the optical assembly 20 can be seen in the lower part of the cleaning device 1. The laser inlet 19 includes an optical fiber.

Fig. 7 illustrates a vertical cross-section of the cleaning device 1, and in particular a vertical cross-section of the fluid assembly 9 and the optical assembly 20. The fluid assembly 9 may be referred to as a flow nozzle. Fig. 7 illustrates an example of an interior of the fluid assembly 9, which will be explained in more detail in the following. Examples of fluid assemblies are described e.g. in US4795092. The fluid assembly 9 defines a fluid flow path 13 between the fluid inlet port 11 and the outlet orifice 12. The fluid assembly 9 is arranged to produce the fluid beam 2, alternatively described as a laminar jet of fluid. The fluid may be water or a solution of water and detergent. In some embodiment, the fluid beam 2 has the appearance of a solid rod of glass without splash or turbulence. The fluid beam 2 is used as an optical light guide to transmit the laser energy from the optical assembly 20 to the target surface 6A.

In the example in Fig. 7, the flow area of the outlet orifice 12 is smaller than an area of the fluid flow path 13 within the enclosure 10. The enclosure 10 of the fluid assembly 9 includes a tubular part 59 defining a first axis 40, a bottom end 60 and an opposite top end 61. The inlet port 11 is arranged in the tubular part 59 close to the bottom end 60, and opens into an inlet chamber 14 defined inside the enclosure 10. The inlet port 11 is in some embodiments arranged tangentially to the enclosure 10 to be able to introduce fluid tangentially into the enclosure 10 in order to produce a smooth swirling that essentially does not produce any varying component of flow in the direction of the first axis 40. The inlet chamber 14 is thus arranged to the bottom end 60 of the enclosure 10. The fluid assembly 9 further includes a diffuser unit 15 arranged in the fluid flow path 13 inside the enclosure 10. In some embodiments the diffuser unit 15 is designed as a cylinder of a coarse-fibre sponge material. The purpose of the diffuser unit 15 is to take out any swirl component of the fluid flow, and allowing the fluid to enter the next part of the fluid assembly 9, here a flow straightener unit 16, without any turbulence. The diffuser unit 15 may be held in place inside the enclosure 10 by mesh panels at the top and the bottom of the diffuser unit 15. The fluid assembly 9 further includes the flow straightener unit 16 arranged upstream the diffuser unit 15 in the fluid flow path 13 inside the enclosure 10. The flow straightener unit 16 includes a plurality of parallel sub flow paths 16A arranged parallel with the outlet orifice 12 and within the enclosure 10 in order to produce a laminar flow in the enclosure 10. The sub flow paths 16A are thus arranged parallel with the first axis 40. The parallel sub flow paths 16A are in some embodiments designed as a plurality of thin tubes that are joined together. The thin tubes are then coaxial with the first axis 40.

An inner tube 18 is arranged in the flow straightening unit 16 along the first axis 40. The inner tube 18 is arranged for guiding a first laser beam 5, a sensing signal 28 and a reflected signal 29 inside the enclosure 10, as will be explained in the following. The fluid assembly 9 is further arranged with an output chamber 17 arranged downstream the flow straightening unit 16. The output chamber 17 is arranged between the flow straightening unit 16 and the top end 61. In the output chamber 17, the flow from the plurality of parallel sub flow paths 16A recombines before exiting the cleaning device 1 through the outlet orifice 12. The outlet orifice 12 is arranged in the top end 61 of the enclosure 10. In some embodiments, the outlet orifice 12 has a sharp edge against the inside of the enclosure 10. A sharp edge is herein defined as an edge having a thin edge or a fine point capable of finely adjusting, or cutting into, the fluid beam 2 being forced out of the outlet orifice 12. The sharp edge minimizes drag on the outer surface of the fluid beam 2, ensuring a uniform velocity profile through the width of the fluid beam 2, which keeps the flow of the fluid beam 2 together as it travels through the air. The sharp edge may be made by designing the outlet orifice 12 to have a varying diameter where the diameter facing the outside of the cleaning device 1 is greater than the diameter facing the inside of the cleaning device 1. The fluid beam 2 is in some embodiments between 10-20 mm in diameter, but the fluid assembly 9 could alternatively be designed to provide a fluid beam 2 having a smaller or greater diameter. The enclosure 10 further includes a laser input port 24. The laser input port 24 is in the example in the figures arranged in the bottom end 60 of the enclosure 10.

The cleaning device 1 also includes the optical assembly 20, in Fig. 7 arranged to the outside of the enclosure 10 of the fluid assembly 9, more precisely to the outside of the bottom end 60 of the fluid assembly 9. The optical assembly 20 is illustrated in isolation in Fig. 8 and 9, wherein Fig. 9 illustrates a vertical cross-section of Fig. 8. The optical assembly 20 includes a laser beam optic arrangement 23 configured to direct a first laser beam 5 through the laser input port 24 and further through the outlet orifice 12, and to focus the first laser beam 5 inside the fluid beam 2. The first laser beam 5 is thus guided through the inlet chamber 14, the diffuser unit 15, the flow straightener 16 (via the tube 18) and the outlet chamber 17, in that order, before the first laser beam 5 leaves the cleaning device 1 through the outlet orifice 12 and is further guided in the fluid beam 2.

The first laser beam 5 is for example supplied, via an optical fibre, from an industrial laser located remotely from the cleaning device 1. In some embodiments, a single laser in the range of 100 W - 1 kW power is used to deliver energy to multiple cleaning devices 1 via optical fibres. Such power may be generated by combining multiple low-cost, compact laser diodes of the type used in consumer electronics. Alternatively, a laser source such as a laser diode may be arranged directly in connection to the cleaning device 1, or included in the optical assembly 20.

The optical assembly 20 further includes a sensing arrangement 26 configured to emit a sensing signal 28 through the laser input port 24 and further trough the outlet orifice 12. The sensing arrangement 26 is arranged to receive, i.e. detect, a reflected signal 29 of the sensing signal 28 reflected by the fluid beam 2, and to determine length data of the fluid beam 2 based on the reflected signal 29. The optical assembly 20 is further arranged to regulate the laser beam optic arrangement 23 based on the determined length data in order to control the focus of the first laser beam 5. The length data indicates the total length of the fluid beam 2. In the example illustrated in the figures, the optical assembly 20 includes a housing 22. The housing 22 accommodates the laser beam optic arrangement 23 in a first tubular part of the housing 22. According to some embodiments, the housing 22 also accommodates the sensing arrangement 26 in a second tubular part of the housing 22. The housing 22 is in the examples of the figures arranged with a laser exit port 63 arranged coaxially with the laser input port 24 and the outlet orifice 12. The first tubular element is here arranged with a first cover 37 sealing an end part of the first tubular element. The first cover 37 is provided with a laser fiber port 36 arranged for holding a laser fiber guiding the first laser beam 5 into the optical assembly 20. The first tubular part has an opposite open end that opens into the second tubular part of the housing 22. The second tubular part is arranged with a second cover 38 sealing an end of the second tubular part. The second cover 38 is provided with the laser exit port 63. The laser exit port 63 is further covered by a window 35 such that no fluid can be introduced into the optical assembly 20 from the fluid assembly 9. The opposite end of the second tubular part is provided with a third cover 39 sealing the opposite end.

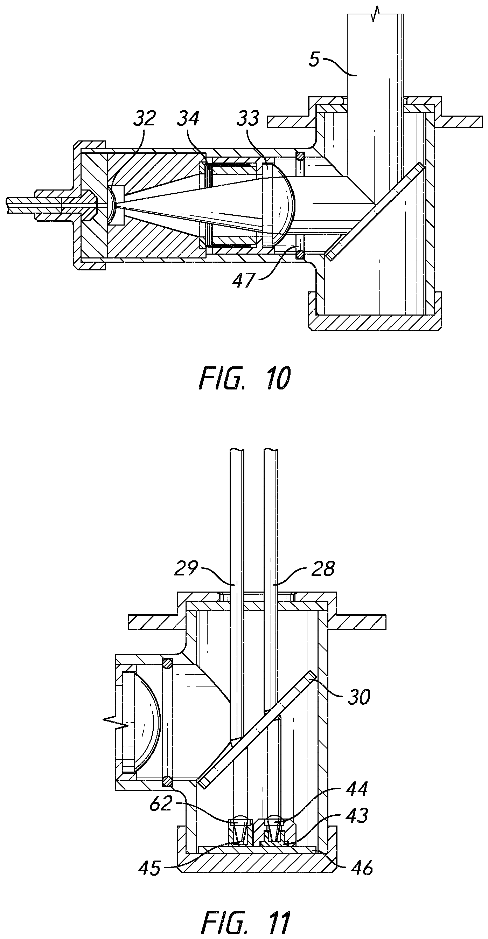

The laser beam optic arrangement 23 defines a second axis 41. The sensing arrangement 26 further defines a third axis 42. The third axis 42 is here aligned with the first axis 40. The first tubular part is here coaxial with the second axis 41, and the second tubular part is coaxial with the third axis 42. The second axis 41 is here arranged perpendicular to the third axis 42. In some embodiments, the laser beam optic arrangement 23 includes an expansion element 32 arranged to expand the first laser beam 5, e.g. a concave lens. The laser beam optic arrangement 23 further includes an axially movable focusing element 33, e.g. an objective or other optical elements used e.g. in a projector, arranged to focus the first laser beam 5. The laser beam optic arrangement 23 further includes an actuator 34, e.g. a voice coil actuator, arranged to regulate the axial movement, along the second axis 41, of the focusing element 33 based on a control signal. The laser beam optic arrangement 23 may further include a dichromic mirror 30 that is arranged to direct or reflect the first laser beam 5 in the axial direction of the fluid assembly 9 such that it enters the fluid assembly 9 through the laser input port 24 and further exits the same through the outlet orifice 12. The dichroic mirror 30 is used as it has different transmission and reflectivity characteristics for different colours of light. In the examples the dichromic mirror 30 is arranged to reflect the first laser beam 5, for example about 90°, such that the first laser beam 5 becomes coaxial with the first axis 40 and the third axis 42. The dichroic mirror 30 is here arranged in the second tubular part. The laser beam path of the first laser beam 5 through the optical assembly 20 is illustrated in Fig. 10. The first laser beam 5 is input via the laser port 36 and guided via the expansion element 32 and the focusing element 34 onto the dichromic mirror 30, which reflects the first laser beam 5 through the laser exit port 63, the laser input port 24 and further through the outlet orifice 12. The first laser beam 5 is in some embodiments pulsed.

By measuring the length of the fluid beam 2, the focus of the first laser beam 5 can be regulated such that cavitation in the fluid beam 2 can be achieved where desired. For that purpose, the cleaning device 1 is provided with the sensing arrangement 26. The sensing arrangement 26 includes a signal generator 43 configured to generate the sensing signal 28, and a signal detector 45 arranged to sense a reflected signal 29 of the sensing signal 28. In some embodiments, the sensing signal 28 is a second laser beam, and the sensing arrangement 26 includes a time of flight (TOF) sensing optic arrangement configured to generate the second laser beam and to detect the reflected signal 29. For example, the signal generator 43 includes a diode, e.g. a blue diode, such as a LED (Light Emitting Diode) or a laser diode. The outgoing light from the signal generator 43, i.e. the sensing signal 28, is reflected from various points along the length of the fluid beam 2 until it reaches the surface 6A of an object 6 at the end of the fluid beam 2 and produces no more reflections. The reflected light returning from the fluid beam 2, i.e. the reflected signal 29, is detected by the signal detector 45, and the length of the fluid beam 2 is determined on the basis of the time between the emission of the sensing signal 28 and the detection of the corresponding reflected signal 29. The signal paths of the sensing signal 28 and the reflected signal 29 are illustrated in Fig. 11. In an alternative embodiment, the sensing signal 28 is an ultrasound signal, and the sensing arrangement 26 is arranged to emit and to detect such a signal.

In some embodiments, the first laser beam 5 and the second laser beam have different colors. As has been previously explained, the laser beam optic arrangement 23 may include a dichroic mirror 30. The dichroic mirror 30 is arranged to reflect the first laser beam 5 and to transmit the second laser beam. In the example in Fig. 9, the second laser beam is a low power laser beam in the range of 1-100 mW and which has been produced directly by a laser diode. The laser diode illuminates with a different colour than the first laser beam 5, such that the light is able to pass through the dichroic mirror 30. The light from the signal generator 43 is then focused by a first lens 44 to create the sensing signal 28 being a second laser beam 28. The reflected signal 29 is focused by a second lens 62 onto the signal detector 45, e.g. a focal plane array with photo sensitive elements. Depending on the distance travelled, the incoming reflected light will experience a delay. A photo sensitive element converts the incoming reflected light into a current from which the delay and thus the distance of the fluid beam 2 can be determined. The sensing arrangement 26 also includes a driver 46 included in a printed circuit board (PCB). The driver 46 is arranged to control the signal generator 43 and the signal detector 45 e.g. such that they are synchronized.

According to some embodiments, the cleaning device control unit 55 (Fig. 2) is configured to receive length data from the sensing arrangement 26, and to generate a control signal based on the received length data. The cleaning device control unit 55 is further configured to send the control signal to the laser beam optic arrangement 23, whereby the laser beam optic arrangement 23 is configured to regulate the focus of the first laser beam 5 based on the control signal. The length data e.g. includes data of the delay of the reflected signal 29. From the length data, the cleaning device control unit 55 is configured to determine the length of the fluid beam 2. The cleaning device control unit 55 is further configured to e.g. determine an appropriate axial displacement of the axially movable focusing element 34 based on the determined length of the fluid beam 2, such that the first laser beam 5 becomes focused at a predetermined position, e.g. a small distance ahead the fluid beam 2 is terminated, and thus a small distance shorter than the total length of the fluid beam 2.

According to some embodiments, the first laser beam 5 and the sensing signal 28 are configured to be pulsed in synchronization, such that the sensing signal 28 can be emitted and the reflected signal 29 can be received, and thus detected, while the first laser beam 5 is switched off. For example, the cleaning device control unit 55 may be configured to control such synchronization. Alternatively, the pulsation of the first laser beam 5 and the sensing signal 28, respectively, may be set in advance to achieve such a synchronization.

As previously mentioned, the fluid assembly 9 and the optical assembly 20 may be mounted on a motorized pan/tilt platform, as shown in Figure 5, suitable for computer control. In such a setup, the desired cleaning target could be selected by varying the pan and tilt controls as well as the fluid velocity, in order to vary the trajectory of the fluid beam 2. The parabolic trajectory would allow cleaning of objects 6 concealed behind obstacles that would block a line-of-sight approach. In use, the first laser beam 5 would in some embodiments operate in a pulsed mode. When the first laser beam 5 is off, the sensing signal 28 would come on to determine the length of the fluid beam 2 and further a focus distance of the first laser beam 5 in the fluid beam 2 such that the cleaning action would adjust automatically in response to changes in the length of the fluid beam 2.

As previously mentioned, an application for the cleaning device 1 is cleaning of equipment 8, robots 3A, 3B etc. in a food handling facility. The disclosure thus also relates to a system 4 for cleaning the industrial robot 3A, 3B. The system 4 includes at least one cleaning device 1. In some embodiments, the robot controller 49A, 49B of the industrial robot 3A, 3B is configured to control motion of the industrial robot 3A, 3B to be cleaned, and the cleaning device control unit 55 is configured to control motion of the cleaning device 1, in synchronization with each other. Thus, the robot 3A, 3B is arranged to move such that the cleaning device 1 may reach a greater part of the robot 3A, 3B, and/or to more efficiently clean the robot 1. The surfaces to be cleaned could for example be identified by marking surfaces on a 3D model of the factory environment in computer software. From this, appropriate movement patterns for the pan and tilt motors, and fluid beam throw distances, would be generated in order to ensure all surfaces are cleaned. An example of how such an installation might look is shown in Figure 1. Here, four cleaning devices 1 are used to clean most of the surfaces in a robotized food processing cell. The cleaning devices 1 can be used to clean the robots 3A, 3B themselves as the robots 3A, 3B rotate into different poses. Some manual spraying may be required to reach the static bases of the robots 3A, 3B.

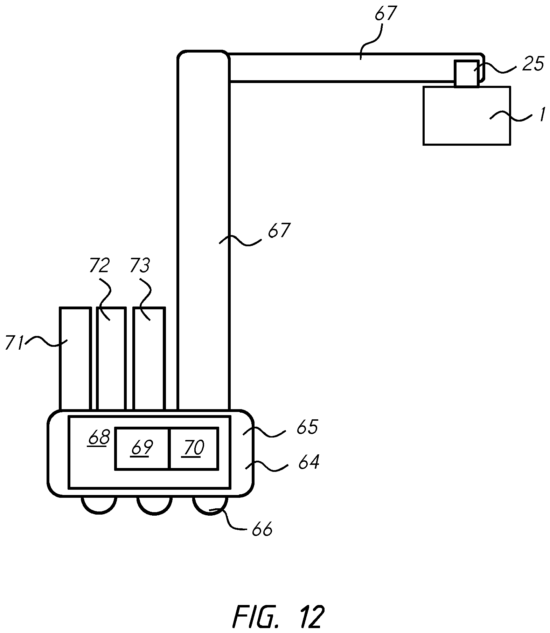

In Fig. 12 a mobile platform 64 is illustrated arranged to transport a cleaning device 1. The mobile platform 64 has a platform part 65 that is arranged with a propelling device 66, here three wheels, such that the mobile platform 64 is movable in any direction on a floor. Alternatively the propelling device 66 may include an endless belt. The mobile platform 64 is further arranged with propulsion means and steering means (not shown). On the platform part 65 a stand 67 is arranged. The stand 67 has an L-shape with a vertical arm arranged to the platform part 65 and a horizontal arm arranged to the vertical arm. The cleaning device 1 is arranged suspended from the horizontal arm. The stand 67 may be moveable in one or two degrees of freedom, and may thus be arranged to move the vertical arm and/or the horizontal arm e.g. in a telescopic manner. The mobile platform 64 includes a platform control unit 68 including a memory 69 and a processor 70. The memory 69 may be made up of one or several memory units. The processor 69 may be made up of one or several CPUs. The platform control unit 68 is arranged to control the propelling device 66 to position the mobile platform 64 in the vicinity of a robot 3A, 3B or equipment 8 of Fig. 1 outside the enclosure 50 of the cell. The stand 67 is thus arranged to reach over the enclosure 50 such that the cleaning device 1 can project a fluid beam 2 against the target, i.e. the robot 3A, 3B or equipment 8. The mobile platform 64 is in some embodiments arranged to be automatically controlled by a program, or alternatively controlled by an operator e.g. by a remote control device (not shown). On the platform part 65 there is arranged a fluid supply 71. The fluid supply 6 may include a water pump, for passing of fluid to the cleaning device 1 via a fluid tight hose (not shown). The platform part 65 may also include a laser generator 73 for generation of the first laser beam 5. The platform part 65 may also carry a transportable power supply 72 in order to give power to the propelling device 66 and also to the cleaning device 1. Alternatively the mobile platform 64 may be powered via a cable (not shown). The platform control unit 68 is in some embodiments arranged to control the mobile platform 64 according to a program such that the mobile platform 64 is driven around in a facility to clean a plurality of robots 3A, 3B and equipment 8. The platform control unit 68 may then be arranged to be in communication with the cleaning device control unit 55, and communicate to the cleaning device control unit 55 when it is correctly positioned and thus could starts a cleaning program in order to clean e.g. a robot 3A, 3B or equipment 8.

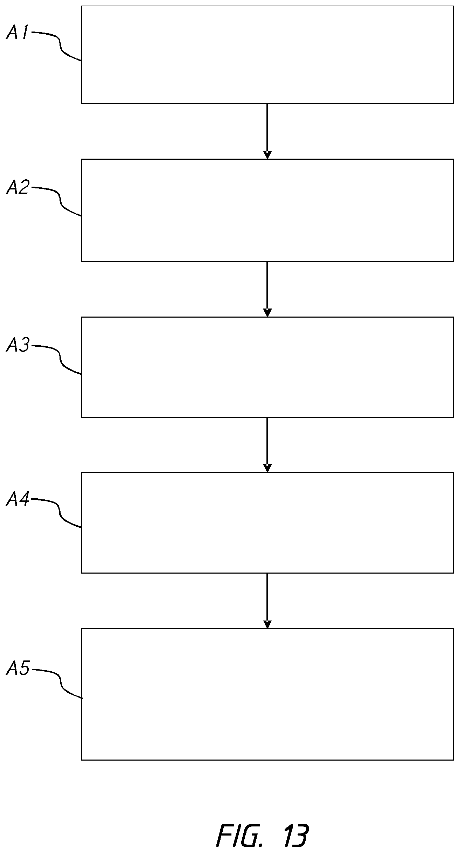

The disclosure also relates to a method for controlling the laser focus inside the fluid beam 2. The method will now be explained with reference to the flow chart illustrated in Fig. 13, and to the illustrations in the other figures. First, the fluid beam 2 is produced by supplying a fluid flow to the cleaning device 1. In a step A1 of the method, the first laser beam 5 having a beam path inside the fluid beam 2 is generated. The first laser beam 5 is supplied from a laser source such as an industrial laser located remotely from the cleaning device 1, or from a laser source arranged to the cleaning device 1, or inside or arranged to the housing 22 of the optical assembly 20. The method further includes in a step A2 emitting the sensing signal 28 with a signal path inside the fluid beam 2. The sensing signal 28 is emitted or generated from the sensing arrangement 26 as has been previously explained. The method further includes detecting the reflected signal 29 of the sensing signal 28 reflected by the fluid beam 2 in a step A3, and determining a length of the fluid beam 2 based on the detected reflected signal 29 in a step A4. The reflected signal 29 is detected by the sensing arrangement 26 as has been previously described. The length of the fluid beam 2 is determined e.g. by the cleaning device control unit 55. The method further includes controlling the focus of the first laser beam 5 based on the determined length of the fluid beam 2 in a step A5. The focus is controlled e.g. by means of the cleaning device control unit 55 that is arranged to generate and to send a control signal to the laser beam optic arrangement 23. The method may also include targeting the fluid beam 2 against a target. This may be done by controlling the movement of the cleaning device 1 according to a program, or by manually holding the cleaning device 1 and manually control the movement of the cleaning device 1. The focus of the first laser beam 5 will then automatically be regulated such that the desired cavitation is produced inside the fluid beam 2. The method thus provides a cost-effective method for accurately measuring the length of the fluid beam 5 and adjusting the laser focus on-the-fly such that any arbitrary 3D surfaces can be cleaned.

The above embodiments should not be taken as limiting the scope of the invention, which is defined by the appending claims.

## Claims

1. A cleaning device (1) including
a fluid assembly (9) arranged to produce a fluid beam (2), the fluid assembly (9) including an enclosure (10) with a fluid inlet port (11), an outlet orifice (12), a fluid flow path (13) between the fluid inlet port (11) and the outlet orifice (12), and a laser input port (24), and
an optical assembly (20) including:
- a laser beam optic arrangement (23) configured to direct a first laser beam (5) through the laser input port (24) and further through the outlet orifice (12) and to focus the first laser beam (5) inside the fluid beam (2); and
- a sensing arrangement (26) configured to emit a sensing signal (28),
**characterized in that** the sensing arrangement is configured to emit the sensing signal through the laser input port (24) and further trough the outlet orifice (12) to receive a reflected signal (29) of the sensing signal (28) reflected by the fluid beam (2), and to determine length data of the fluid beam (2) based on the reflected signal (29), wherein the optical assembly (20) is arranged to regulate the laser beam optic arrangement (23) based on the determined length data in order to control the focus of the first laser beam (5).

2. The cleaning device (1) according to claim 1, wherein the sensing signal (28) is a second laser beam, and wherein the sensing arrangement (26) includes a time of flight sensing optic arrangement configured to generate the second laser beam and to detect the reflected signal (29).

3. The cleaning device (1) according to claim 2, wherein the first laser beam (5) and the second laser beam have different colors, and wherein the laser beam optic arrangement (23) includes a dichroic mirror (30) arranged to reflect the first laser beam and to transmit the second laser beam.

4. The cleaning device (1) according to any of the preceding claims, wherein the laser beam optic arrangement (23) includes an expansion element (32) arranged to expand the first laser beam (5), an axially movable focusing element (33) arranged to focus the first laser beam (5), and an actuator (34) arranged to regulate the axial movement of the focusing element (33) based on a control signal.

5. The cleaning device (1) according to any of the preceding claims, wherein the optical assembly (20) includes a cleaning device control unit (55) configured to receive the length data, and to generate a control signal based on the received length data and send it to the laser beam optic arrangement (23), whereby the laser beam optic arrangement (23) is configured to regulate the focus of the first laser beam (5) based on the control signal.

6. The cleaning device (1) according to any of the preceding claims, wherein the optical assembly (20) includes a housing (22) accommodating the laser beam optic arrangement (23).

7. The cleaning device (1) according to claim 6, wherein the housing (22) is arranged with a laser exit port (63) arranged coaxial with the laser input port (24) and the outlet orifice (12).

8. The cleaning device (1) according to any of the preceding claims, wherein the flow area of the outlet orifice (12) is smaller than an area of the fluid flow path (13) within the enclosure (10), and wherein the fluid assembly (9) includes a plurality of parallel sub flow paths (16A) arranged parallel with the outlet orifice (12) and within the enclosure (10) in order to produce a laminar flow in the enclosure (10).

9. The cleaning device (1) according to any of the preceding claims, wherein the outlet orifice (12) has a sharp edge against an inside of the enclosure (10).

10. The cleaning device (1) according to any of the preceding claims, wherein the enclosure (10) includes a tube (18) for guiding the first laser beam (5), the sensing signal (28) and the reflected signal (29) inside the enclosure (10).

11. The cleaning device (1) according to any of the preceding claims, wherein the first laser beam (5) and the sensing signal (28) are configured to be pulsed in synchronization, such that the sensing signal (28) can be emitted and the reflected signal (29) can be received while the first laser beam (5) is switched off.

12. The cleaning device (1) according to any of the preceding claims, including a control arrangement (7) with a cleaning device control unit (55) for controlling motion of the fluid assembly (9) and/or a flow velocity of the fluid beam (2) in order to target the fluid beam (2) against a target.

13. The cleaning device (1) according to claim 12, wherein the control arrangement (7) is arranged to control a movement of the fluid assembly (9) and the optical assembly (20) in accordance with a computer implemented rule.

14. A system (4) for cleaning an industrial robot (3A, 3B), the system (4) including at least one cleaning device (1) according to claim 12 or 13, wherein a robot controller (49A, 49B) is configured to control motion of the industrial robot (3A, 3B), and the cleaning device control unit (55) is configured to control motion of the cleaning device (1), in synchronization with each other.

15. A method for controlling a laser focus inside a fluid beam (2) including:
- generating a first laser beam (5) with a beam path inside the fluid beam (2); and
- emitting a sensing signal (28) with a signal path inside the fluid beam (2),
the method **characterized by** the further steps of:
- detecting a reflected signal (29) of the sensing signal (28) reflected by the fluid beam (2);
- determining a length of the fluid beam (2) based on the detected reflected signal (29); and
- controlling the focus of the first laser beam (5) based on the determined length of the fluid beam (2).

16. The method according to claim 15, including targeting the fluid beam (2) against a target.

## Patentansprüche

1. Reinigungsvorrichtung (1), aufweisend:
eine Fluidanordnung (9), die geeignet ist zum Produzieren eines Fluidstrahls (2), wobei die Fluidanordnung (9) eine Umhüllung (10) mit einem Fluideinlassanschluss (11), einer Auslassöffnung (12), einem Fluidströmungsweg (13) zwischen dem Fluideinlassanschluss (11) und der Auslassöffnung (12) und einem Lasereingangsanschluss (24) aufweist, und
eine Optikanordnung (20), die aufweist:
- eine optische Laserstrahleinrichtung (23), die konfiguriert ist zum Ausrichten eines ersten Laserstrahls (5) durch den Lasereingangsanschluss (24) und danach durch die Auslassöffnung (12) und zum Fokussieren des ersten Laserstrahls (5) innerhalb des Fluidstrahls (2); und
- eine Sensoreinrichtung (26), die konfiguriert ist zum Abgeben eines Sensorsignals (28),
**dadurch gekennzeichnet, dass** die Sensoreinrichtung konfiguriert ist zum Abgeben des Sensorsignals durch den Lasereingangsanschluss (24) und danach durch die Auslassöffnung (12), um ein reflektiertes Signal (29) des Sensorsignals (28) zu erhalten, das durch den Fluidstrahl (2) reflektiert wird, und zum Ermitteln von Längendaten des Fluidstrahls (2) aufgrund des reflektierten Signals (29), wobei die Optikanordnung (20) geeignet ist zum Regeln der optischen Laserstrahleinrichtung (23) aufgrund der ermittelten Längendaten, um den Fokus des ersten Laserstrahls (5) zu steuern.

2. Reinigungsvorrichtung (1) nach Anspruch 1, wobei das Sensorsignal (28) ein zweiter Laserstrahl ist, und wobei die Sensoreinrichtung (26) eine optische Laufzeiterfassungseinrichtung aufweist, die konfiguriert ist zum Erzeugen des zweiten Laserstrahls und zum Erfassen des reflektierten Signals (29).

3. Reinigungsvorrichtung (1) nach Anspruch 2, wobei der erste Laserstrahl (5) und der zweite Laserstrahl unterschiedliche Farben aufweisen, und wobei die optische Laserstrahleinrichtung (23) einen dichroitischen Spiegel (30) aufweist, der geeignet ist zum Reflektieren des ersten Laserstrahls und zum Übertragen des zweiten Laserstrahls.

4. Reinigungsvorrichtung (1) nach einem der vorhergehenden Ansprüche, wobei die optische Laserstrahleinrichtung (23) aufweist: ein Ausbreitungselement (32), das geeignet ist zum Ausbreiten des ersten Laserstrahls (5); ein axial bewegliches Fokussierelement (33), das geeignet ist zum Fokussieren des ersten Laserstrahls (5); und ein Stellglied (34), das geeignet ist zum Regeln der axialen Bewegung des Fokussierelements (33) aufgrund eines Steuersignals.

5. Reinigungsvorrichtung (1) nach einem der vorhergehenden Ansprüche, wobei die Optikanordnung (20) aufweist: eine Reinigungsvorrichtungssteuereinheit (55), die konfiguriert ist zum Empfangen der Längendaten und zum Erzeugen eines Steuersignals aufgrund der empfangenen Längendaten und zum Senden derselben an die optische Laserstrahleinrichtung (23), wodurch die optische Laserstrahleinrichtung (23) konfiguriert wird zum Regeln des Fokus des ersten Laserstrahls (5) aufgrund des Steuersignals.

6. Reinigungsvorrichtung (1) nach einem der vorhergehenden Ansprüche, wobei die Optikanordnung (20) ein Gehäuse (22) aufweist, in dem die optische Laserstrahleinrichtung (23) untergebracht ist.

7. Reinigungsvorrichtung (1) nach Anspruch 6, wobei das Gehäuse (22) mit einem Laserausgangsanschluss (63) ausgestattet ist, der koaxial zu dem Lasereingangsanschluss (24) und der Auslassöffnung (12) angeordnet ist.

8. Reinigungsvorrichtung (1) nach einem der vorhergehenden Ansprüche, wobei der Strömungsquerschnitt der Auslassöffnung (12) kleiner als ein Querschnitt des Fluidströmungswegs (13) innerhalb der Umhüllung (10) ist, und wobei die Fluidanordnung (9) eine Vielzahl von parallelen Teilströmungswegen (16A) aufweist, die parallel zu der Auslassöffnung (12) und innerhalb der Umhüllung (10) angeordnet sind, um eine laminare Strömung in der Umhüllung (10) zu produzieren.

9. Reinigungsvorrichtung (1) nach einem der vorhergehenden Ansprüche, wobei die Auslassöffnung (12) eine scharfe Kante zu einem Innenraum der Umhüllung (10) aufweist.

10. Reinigungsvorrichtung (1) nach einem der vorhergehenden Ansprüche, wobei die Umhüllung (10) eine Röhre (18) aufweist, um den ersten Laserstrahl (5), das Sensorsignal (28) und das reflektierte Signal (29) innerhalb der Umhüllung (10) zu leiten.

11. Reinigungsvorrichtung (1) nach einem der vorhergehenden Ansprüche, wobei der erste Laserstrahl (5) und das Sensorsignal (28) konfiguriert sind, um synchronisiert gepulst zu werden, sodass das Sensorsignal (28) abgegeben werden kann und das reflektierte Signal (29) empfangen werden kann, während der erste Laserstrahl (5) ausgeschaltet ist.

12. Reinigungsvorrichtung (1) nach einem der vorhergehenden Ansprüche, die eine Steuereinrichtung (7) mit einer Reinigungsvorrichtungssteuereinheit (55) zum Steuern einer Bewegung der Fluidanordnung (9) und/oder einer Strömungsgeschwindigkeit des Fluidstrahls (2) umfasst, um mit dem Fluidstrahl (2) ein Ziel anzuvisieren.

13. Reinigungsvorrichtung (1) nach Anspruch 12, wobei die Steuereinrichtung (7) geeignet ist zum Steuern einer Bewegung der Fluidanordnung (9) und der Optikanordnung (20) gemäß einer computergestützten Regel.

14. System (4) zum Reinigen eines Industrieroboters (3A, 3B), wobei das System (4) mindestens eine Reinigungsvorrichtung (1) nach Anspruch 12 oder 13 aufweist, wobei eine Robotersteuereinheit (49A, 49B) konfiguriert ist zum Steuern einer Bewegung des Industrieroboters (3A, 3B), und wobei die Reinigungsvorrichtungssteuereinheit (55) konfiguriert ist zum Steuern einer Bewegung der Reinigungsvorrichtung (1) in einer gegenseitigen Synchronisation.

15. Verfahren zum Steuern eines Laserfokus innerhalb eines Fluidstrahls (2), wobei das Verfahren aufweist:
- Erzeugen eines ersten Laserstrahls (5) mit einem Strahlengang innerhalb des Fluidstrahls (2); und
- Abgeben eines Sensorsignals (28) mit einem Strahlengang innerhalb des Fluidstrahls (2),
wobei das Verfahren durch die folgenden Schritte gekennzeichnet ist:
- Erkennen eines reflektierten Signals (29) des Sensorsignals (28), das von dem Fluidstrahl (2) reflektiert wird;
- Ermitteln einer Länge des Fluidstrahls (2) aufgrund des erkannten reflektierten Signals (29); und
- Steuern des Fokus des ersten Laserstrahls (5) aufgrund der ermittelten Länge des Fluidstrahls (2).

16. Verfahren nach Anspruch 15, das ein Anvisieren eines Ziels mit dem Fluidstrahl (2) aufweist.

## Revendications

1. Dispositif de nettoyage (1) comprenant :
un ensemble de fluide (9) agencé pour produire un faisceau de fluide (2), l'ensemble de fluide (9) comprenant une enceinte (10) avec un orifice d'entrée de fluide (11), un orifice de sortie (12), un trajet d'écoulement de fluide (13) entre l'orifice d'entrée de fluide (11) et l'orifice de sortie (12), et un orifice d'entrée laser (24), et
un ensemble optique (20) comprenant :
- un agencement optique de faisceau laser (23) configuré pour diriger un premier faisceau laser (5) à travers l'orifice d'entrée laser (24) et en outre à travers l'orifice de sortie (12) et pour focaliser le premier faisceau laser (5) à l'intérieur du faisceau de fluide (2) ; et
- un agencement de détection (26) configuré pour émettre un signal de détection (28),
**caractérisé en ce que** l'agencement de détection est configuré pour émettre le signal de détection à travers l'orifice d'entrée laser (24) et en outre à travers l'orifice de sortie (12) pour recevoir un signal réfléchi (29) du signal de détection (28) réfléchi par le faisceau de fluide (2), et pour déterminer les données de longueur du faisceau de fluide (2) sur la base du signal réfléchi (29), l'ensemble optique (20) étant agencé pour réguler l'agencement optique de faisceau laser (23) sur la base des données de longueur déterminées afin de commander la focalisation du premier faisceau laser (5).

2. Dispositif de nettoyage (1) selon la revendication 1, le signal de détection (28) étant un second faisceau laser, et l'agencement de détection (26) comprenant un agencement optique de détection de temps de vol configuré pour générer le second faisceau laser et pour détecter le signal réfléchi (29).

3. Dispositif de nettoyage (1) selon la revendication 2, le premier faisceau laser (5) et le second faisceau laser ayant des couleurs différentes, et l'agencement optique de faisceau laser (23) comprenant un miroir dichroïque (30) agencé pour réfléchir le premier faisceau laser et pour transmettre le second faisceau laser.

4. Dispositif de nettoyage (1) selon l'une quelconque des revendications précédentes, l'agencement optique de faisceau laser (23) comprenant un élément d'expansion (32) agencé pour étendre le premier faisceau laser (5), un élément de focalisation axialement mobile (33) agencé pour focaliser le premier faisceau laser (5), et un actionneur (34) agencé pour réguler le mouvement axial de l'élément de focalisation (33) sur la base d'un signal de commande.

5. Dispositif de nettoyage (1) selon l'une quelconque des revendications précédentes, l'ensemble optique (20) comprenant une unité de commande de dispositif de nettoyage (55) configurée pour recevoir les données de longueur, et pour générer un signal de commande basé sur les données de longueur reçues et l'envoyer à l'agencement optique de faisceau laser (23), l'agencement optique de faisceau laser (23) étant configuré pour réguler la focalisation du premier faisceau laser (5) sur la base du signal de commande.

6. Dispositif de nettoyage (1) selon l'une quelconque des revendications précédentes, l'ensemble optique (20) comprenant un boîtier (22) recevant l'agencement optique de faisceau laser (23).

7. Dispositif de nettoyage (1) selon la revendication 6, le boîtier (22) étant agencé avec un port de sortie laser (63) agencé coaxialement avec le port d'entrée laser (24) et l'orifice de sortie (12).

8. Dispositif de nettoyage (1) selon l'une quelconque des revendications précédentes, la surface d'écoulement de l'orifice de sortie (12) étant inférieure à une zone du trajet d'écoulement de fluide (13) à l'intérieur de l'enceinte (10), et l'ensemble de fluide (9) comprenant une pluralité de sous-trajets d'écoulement parallèles (16A) agencés parallèlement à l'orifice de sortie (12) et à l'intérieur de l'enceinte (10) afin de produire un écoulement laminaire dans l'enceinte (10).

9. Dispositif de nettoyage (1) selon l'une quelconque des revendications précédentes, l'orifice de sortie (12) ayant un bord tranchant contre un intérieur de l'enceinte (10).

10. Dispositif de nettoyage (1) selon l'une quelconque des revendications précédentes, l'enceinte (10) comprenant un tube (18) destiné à guider le premier faisceau laser (5), le signal de détection (28) et le signal réfléchi (29) à l'intérieur de l'enceinte (10).

11. Dispositif de nettoyage (1) selon l'une quelconque des revendications précédentes, le premier faisceau laser (5) et le signal de détection (28) étant configurés pour être pulsés en synchronisation, de sorte que le signal de détection (28) peut être émis et le signal réfléchi (29) peut être reçu lorsque le premier faisceau laser (5) est éteint.

12. Dispositif de nettoyage (1) selon l'une quelconque des revendications précédentes, comprenant un dispositif de commande (7) avec une unité de commande de dispositif de nettoyage (55) destiné à commander le mouvement de l'ensemble de fluide (9) et/ou une vitesse d'écoulement du faisceau de fluide (2) afin de cibler le faisceau de fluide (2) contre une cible.

13. Dispositif de nettoyage (1) selon la revendication 12, l'agencement de commande (7) étant agencé pour commander un mouvement de l'ensemble de fluide (9) et de l'ensemble optique (20) conformément à une règle mise en œuvre par ordinateur.

14. Système (4) de nettoyage d'un robot industriel (3A, 3B), le système (4) comprenant au moins un dispositif de nettoyage (1) selon la revendication 12 ou 13, un dispositif de commande de robot (49A, 49B) étant configuré pour commander le mouvement du robot industriel (3A, 3B), et l'unité de commande de dispositif de nettoyage (55) étant configurée pour commander le mouvement du dispositif de nettoyage (1), en synchronisation l'un avec l'autre.

15. Procédé de commande d'un foyer laser à l'intérieur d'un faisceau de fluide (2) comprenant :
- la génération d'un premier faisceau laser (5) avec un trajet de faisceau à l'intérieur du faisceau de fluide (2) ; et
- l'émission d'un signal de détection (28) avec un trajet de signal à l'intérieur du faisceau de fluide (2),
le procédé étant **caractérisé par** les étapes suivantes de :
- détection d'un signal réfléchi (29) du signal de détection (28) réfléchi par le faisceau de fluide (2) ;
- détermination d'une longueur du faisceau de fluide (2) sur la base du signal réfléchi détecté (29) ; et
- commande de la focalisation du premier faisceau laser (5) sur la base de la longueur déterminée du faisceau de fluide (2).

16. Procédé selon la revendication 15, comprenant le ciblage du faisceau de fluide (2) contre une cible.
